# EUROPEAN PATENT APPLICATION

(11) **EP 1 914 573 A2**
(43) Date of publication of application: **23.04.2008**
(21) Application number: 06122901.9
(22) Date of filing: 12.03.2001
(51) Int. Cl.: G02B 6/00, G02B 6/42, G03B 21/28

(54) **Coupling of light from a light source to a target using dual ellipsoidal reflectors**

(30) Priority: 27.03.2000 US 192321 P; 27.09.2000 US 669841
(62) Divisional of application: 01948199.3
(71) Applicant: Wavien, Inc., Santa Clarita, CA 91355-1137 (US)
(72) Inventor: Li, Kenneth K., Castec, CA 91384 (US)
(74) Representative: Grynwald, Albert

(57) **Abstract**

A condensing and collecting optical system includes a first (20) and second reflector (30). The first and second reflector include a portion of an ellipsoid of revolution having two foci and a symmetry axis. A source (10) of light is located in one of the focal points, two focal points of the reflectors overlap, and a target (50) is located in another focal point of the other reflector.

## Description

### Field of the Invention

This invention relates to systems for collecting and condensing electromagnetic radiation, particularly a system incorporating substantially ellipsoidal reflectors for collecting radiation emitted from a radiation source and focusing the collected radiation onto a target.

### Background of the Invention

An optical collecting and condensing system comprises various optical elements, such as reflectors and lenses, that receives light energy from a light source, such as a light bulb, and directs the light energy toward a target. In particular, the optical system collects and condenses electromagnetic radiation to couple the light energy to a standard waveguide, such as a single fiber or fiber bundle or to output the light energy to a homogenizer of a projector. The functional objective for the optical system is to maximize the brightness (i.e., the flux intensity) of the electromagnetic radiation at the target.

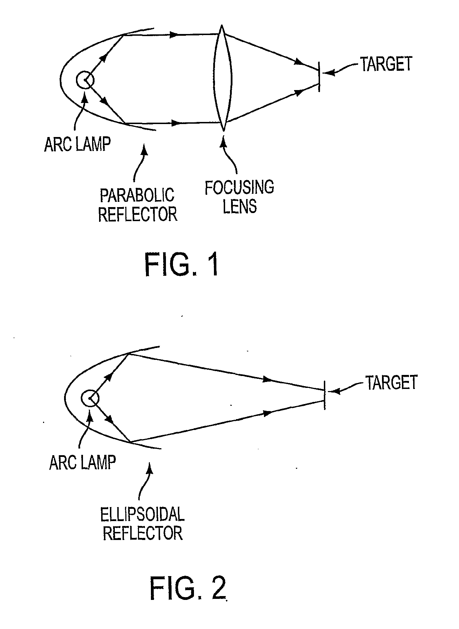

Optical systems for collecting and condensing light from a light source are generally classified as either "on-axis" or "off-axis." In the on-axis systems, the reflectors are positioned on the optical axis between light source, and the target. FIG. 1 illustrates a known on-axis optical system that uses a paraboloid reflector with an imaging lens. The paraboloid reflector has the feature that light energy emanating from a focus is substantially collimated to travel parallel to the optical axis. The optical system of FIG. 1 uses this feature of the paraboloid reflector by positioning the light source at the focus in order to collimate the light from the light source. A condensing lens positioned in the optical stream receives the substantially collimated light energy and redirects the light energy toward the target. In this way, the light energy is collected and condensed at the target. The use of the paraboloid reflector further allows the use of various types of optical filters to improve the performance and durability of the optical system. However, the divergence of the light varies continuously along the reflector, with rays traveling near the optical axis having the greatest divergence. As a result, the magnification of the system varies along the different paths taken by the light emitted from the light source, causing degradation of the brightness of the system. Moreover, the focusing lens produces a distorted image even under perfect conditions and under actual operation typically produces badly aberrated images which effectively increase the image size and reduce flux intensity at the target.

FIG. 2 illustrates another known on-axis optical system. This system uses an ellipsoidal reflector, which has the feature that all light emanating from one focal point is directed to a second focal point. The optical system of FIG. 2 uses an ellipsoidal reflector with a light source placed at the first focus and a target placed at the second focus. As in the previous system, the on-axis ellipsoidal system suffers from brightness degradation caused because the divergence of the light varies continuously along the reflector, with rays traveling near the optical axis having the greatest divergence.

Overall, on-axis systems generally suffer from the basic limitations of losing brightness in the coupling, thus degrading the overall efficiency of the optical illumination and projection system. In particular, the divergence of the reflected beam in known on-axis systems is undesirably dependent on the angle of emission from the radiation source. Additionally, the outputs of the on-axis system are substantially circular and symmetric and, therefore, may not be suitable for non-circular targets, such as a rectangular homogenizer for use in projection.

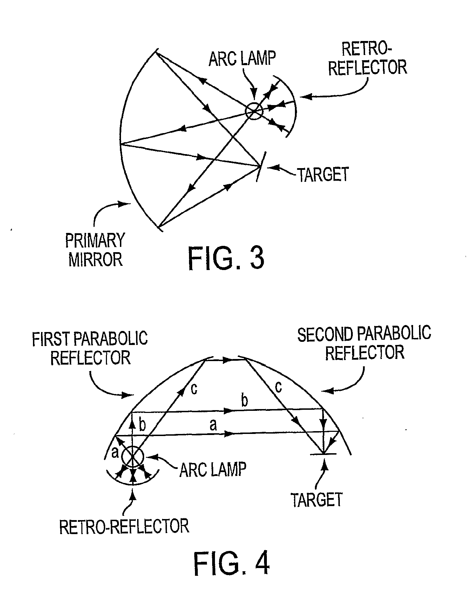

In off-axis optical collecting systems, the reflectors are positioned off the optical axis between the light source and the target. For example, FIG. 3 illustrates an optical system in which the light source is positioned at a focal point of a retro-reflector and the target is positioned on a focal point of a primary reflector, but the reflectors are positioned off the optical axis between the light source and the target. In the illustrated optical system, light energy from the light source reflects from the retro-reflector and travels to the primary reflector. The optical energy then reflects from the primary reflector and converges at the target.

With the off axis system of FIG. 3, the magnification is very close to 1-to-1 for all angles of light when the numerical aperture of the system is small. When the system uses mirrors having higher numerical apertures (e.g., attempts to collect more light energy from the same light source) the larger angle light rays are reflected with high divergence angles, causing the magnification to deviate from 1-to-1. Again, the magnification reduces the brightness at the target and overall decreases the performance of the optical system. The amount of deviation in the magnification depends on the size of the mirror, the radius of curvatures, and the separation of the arc lamp and the target. Accordingly, the off-axis configuration of FIG. 3 is more suitable for applications that use smaller numerical apertures.

Different off-axis optical systems are also known. For example, U.S. Letters Patent No. 4,757,431 ("the '431 patent") provides a condensing and collecting system employing an off-axis spherical concave reflector which enhances the maximum flux intensity illuminating a small target and the amount of collectable flux density by the small target. Enhancements to the optical system of the '431 patent are provided by U.S. Letters Patent No. 5,414,600 ("the '600 patent"), in which the off-axis concave reflector is an ellipsoid, and by U.S. Letters Patent No. 5,430,634 ("the '634 patent"), in which the off-axis concave reflector is a toroid. Although the toroidal system described in the '634 patent corrects for astigmatism, and the ellipsoidal system of the '600 patent provides a more exact coupling than the spherical reflector of the '431 patent, each of these systems requires the application of an optical coating onto a highly curved reflective surface, which is relatively expensive and difficult to apply in a uniform thickness.

Overall, the known off-axis optical systems provide a generally near 1-to-1 (i.e., magnification free) image of the light source at the target and conserve brightness. However, in the known off-axis systems, the magnification deviates from 1-to-1 as the amount of light collected is increased by increasing the collection angle of the reflector. Thus, as a greater portion of light energy from a light source is collected to increase optical intensity, the overall performance of the optical system degrades.

To address problems in the known optical collection and condensing systems, U.S. Patent Application Serial No. 09/604,921 provides an on-axis, dual-paraboloid reflector system that is advantageous in many respects to other known systems, including the achievement of near 1-to-1 magnification for small-sized light sources. This optical collection and condensing system, as illustrated in FIG. 4, uses two generally symmetric paraboloid reflectors that are positioned so that light reflected from the first reflector is received in a corresponding section of the second reflector. In particular, light emitted from the light source is collected by the first parabolic reflector and collimated along the optical axis toward the second reflector. The second receives the collimated beam of light and focuses this light at the target positioned at the focal point.

To facilitate the description of this optical system, FIG. 4 includes the light paths for three different rays (**a**, **b**, and **c**) emitted from the light source. Ray **a** travels a relatively small distance before intersecting the first parabolic reflector, but the divergence of ray **a** at the first parabolic reflectors is relatively large. In contrast, ray c travels further between the light source and the first parabolic reflector but has a smaller relative divergence at the first reflector. Ray **b,** positioned between rays **a** and **c,** travels an intermediate distance before intersecting the first parabolic reflector and has an intermediate divergence. In this optical system, due to the symmetry of the two parabolic reflectors, the rays **a, b,** and **c** are reflected at corresponding positions in the second parabolic reflector such that the distance for each ray between the second parabolic reflector and the target is the same as the distance between the light source and the first parabolic reflector. In this way, the second reflector compensates for the divergence. Consequently, the optical system collects and condenses light energy from the light source with a near 1-to-1 magnification and preserves the brightness of the light source.

The optical system of FIG. 4 may further employ a retro-reflector in conjunction with the first paraboloid reflector to capture radiation emitted by the source in a direction away from the first paraboloid reflector and reflect the captured radiation back through the source. In particular, the retro-reflector has a generally spherical shape with a focus located substantially near the light source (i.e., at the focal point of the first paraboloid reflector) toward the first paraboloid reflector to thereby increase the intensity of the collimated rays reflected therefrom.

One shortcoming in the above described on-axis, dual-paraboloid optical system arises because the light source is very close to the apex side of the reflector. As a result, the system produces a large angle of divergence near the light source (i.e., along the paths similar to ray a). In particular, a large angle of divergence causes light energy traveling along a path similar to ray a to compass a relatively larger area on the second parabolic reflector, thus producing unwanted aberrations and a loss of brightness.

In view of these shortcomings in known optical collection and condensing systems, there remains a present need for an improved method and system of coupling light from a small source to illumination and projection systems.

### Summary of the Invention

In response to the above-identified needs, the present invention provides an improved optical collection and condensing system. The improved system for collecting and condensing electromagnetic radiation employs opposing reflectors to achieve unit magnification, or near unit magnification, between a source image and a focused image at a target, thereby producing maximum focused intensity at the target. In particular, the present invention is directed to an optical device for collecting electromagnetic radiation from a source of electromagnetic radiation and focusing the collected radiation onto a target to be illuminated with at least a portion of the electromagnetic radiation emitted by the source. The device includes first and second reflectors, where each reflector generally comprises at least a portion of an ellipsoid of revolution and has an optical axis and two focal points on the optical axis. A light source located proximate the one of focal points of the first reflector produces rays of radiation that converge at the second focal point of the first reflector. The second reflector is positioned and oriented with respect to the first reflector so that the rays of radiation reflected from the first reflector converge at a one focal point of the second reflector. The rays of radiation then continue until reflected by the second reflector and focused toward a target located proximate a second focal point of the second reflector. The first reflector and the second reflector have substantially the same size and shape and may be oriented optically about symmetrically with respect to each other so that each ray of radiation reflected by a surface portion of the first reflector is reflected by a corresponding surface portion of the second reflector toward the target to achieve a unit magnification.

A retro-reflector may be used in conjunction with the first reflector to capture radiation emitted by the source in a direction away from the first reflector and to reflect the captured radiation back through the source (i.e., through the first focal point of the first reflector) toward the first reflector to thereby increase the intensity of the rays reflected therefrom.

The shape of the first and second reflectors may deviate from an ellipsoid as needed by the system. Similarly, the first and second reflectors may have a toroidal or spherical shape that approximate an ellipsoid.

### Description of the Drawings

Embodiments of the present invention will be described with reference to the attached drawings in which like components or features in the various figures are represented by like reference numbers:
FIG. 1 is a schematic diagram, shown in cross-section, of a known on-axis condensing and collecting optical system that uses a paraboloid reflector and a focusing lens;
FIG. 2 is a schematic diagram, shown in cross-section, of a known on-axis condensing and collecting optical system that uses an ellipsoidal reflector;
FIG. 3 is a schematic diagram, shown in cross-section, of a known off-axis condensing and collecting optical system;
FIG. 4 is a schematic diagram, shown in cross-section, of a known on-axis condensing and collecting optical system that uses two paraboloid reflectors;
FIG. 5 is a schematic diagram, shown in cross-section, of an off-axis condensing and collecting optical system using two ellipsoidal reflectors in accordance with one embodiment of the present invention;
FIG. 6 is a schematic diagram, shown in cross-section, of a condensing and collecting optical system using two reflectors of greater eccentricity in accordance with an alternative embodiment of the present invention; and
FIGS. 7A-7J are schematic views of a plurality of waveguide targets in cross-sections which may be employed in embodiments of the present invention.

### Detailed Description of Exemplary Embodiments

With reference to the figures, exemplary embodiments of the invention are now described. These embodiments illustrate principles of the invention and should not be construed as limiting the scope of the invention.

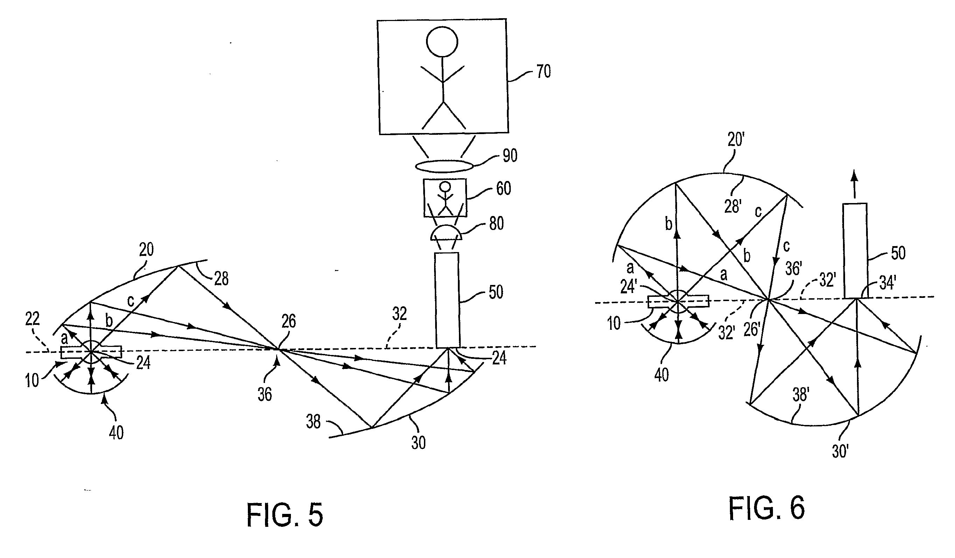

Referring to FIGS. 5-6 as showing representative preferred embodiments of the present invention, the invention has associated therewith the following four main components:

### 1. Electromagnetic Source

The electromagnetic source 10 is preferably a light source having an envelope 12. Most preferably, the source 10 comprises an arc lamp such as a xenon lamp, a metal-halide lamp, a HID lamp, or a mercury lamp. For certain applications, filament lamps, e.g., halogen lamps, can be used, provided the system is modified to accommodate the non-opaque filaments of the lamp, as will be described in more detail below. However, any source of electromagnetic radiation which is of similar size to or smaller than the target may be used (e.g., fiber, filament lamp, gas discharge lamp, laser, LED, semiconductor, etc.).

The size of the electromagnetic source here is better defined by the 1/e intensity of the intensity contour map which characterizes the brightness (flux density over angular extent) of the source. Brightness is related to the size of the arc gap and determines the theoretical limit of coupling efficiency. For the specific case of an arc lamp, the contour approximates axial symmetry and is a complex function of electrical rating, electrode design and composition, gas pressure, arc gap size, and gas composition. For the specific case of an arc lamp having an aspherical curved envelope, the effective relative position and intensity distribution of the source imaged by the reflector undergoes aberration. This is caused by the shape of the envelope which essentially functions as a lens and requires a compensating optical element. Optical compensation can be achieved either by modifying the design of the reflector to compensate for the astigmatism caused by the envelope or by inserting a correcting optic between the source and the target. Additionally, optical coatings can be applied to the envelope to minimize Fresnel reflections and thereby maximize collectable radiation at the target or to control and/or filter the radiation flux.

### 2. First Ellipsoidal Reflector

The first ellipsoidal reflector 20 preferably comprises a portion of an ellipsoid of revolution having an optical axis 22 and focal points 24 and 26. The first ellipsoidal reflector 20 preferably has a reflective coating 28 (*e.g*., aluminum or silver) and the surface is highly polished. For certain applications, the first ellipsoidal reflector 20 can be made from glass coated with a wavelength-selective multi-layer dielectric coating. For example, the coating 28 may be a cold coating with high reflectivity only in the visible wavelengths for use in visual light applications. With the source 10 placed at the first focal point 24 of the first ellipsoidal reflector, electromagnetic radiation that contacts the reflector 20 is reflected as a beam of energy that converges the second focal point 26 of the reflector 20. Where the source 20 is an arc lamp, the arc gap is preferably small compared to the focal length of the first ellipsoidal reflector 20.

### 3. Second Ellipsoidal Reflector

The second ellipsoidal reflector 30 preferably comprises a portion of an ellipsoid of revolution having an optical axis 32 and focal points 34 and 36. The second reflector 30 may also have a coating 38, as described above to selectively reflect light energy. The second ellipsoidal reflector 30 may differ from first reflector 20, but is preferably substantially the same size and substantially the same shape as the first ellipsoidal reflector 20.

The second ellipsoidal reflector 30 is positioned and oriented so that the electromagnetic radiation reflected by the first ellipsoidal reflector 20 converges at the second focal point 36 of the second ellipsoidal reflector 30. The radiation continues until impinging the surface of the second ellipsoidal reflector 30 and is thereafter focused toward the first focal point 34 of the second ellipsoidal reflector 30. In order to achieve unit magnification between the first ellipsoidal reflector 20 and the second ellipsoidal reflector 30 (i.e., a focused image that is substantially the same size as the source), it is important that each ray of electromagnetic radiation reflected and focused by a surface portion of the first ellipsoidal reflector 20 be reflected and focused by a corresponding surface portion of the second ellipsoidal reflector 30 in order to achieve a focus at the first focal point 34 that is of the maximum possible brightness. In the context of the present disclosure, orienting and positioning the first ellipsoidal reflector 20 and the second ellipsoidal reflector 30 with respect to each other so that each ray of electromagnetic radiation collimated by a surface portion of the first ellipsoidal reflector 20 is focused by a corresponding surface portion of the second ellipsoidal reflector 30 will be referred to as positioning the reflectors in "optical symmetry" with respect to each other.

### 4. Target

The target 50 is a small object requiring illumination with the highest intensity possible. In a preferred embodiment, the target 50 is a waveguide, such as a single core optic fiber, a fused bundle of optic fibers, a fiber bundle, as illustrated in FIG. 6. An input end of the target (e.g., a proximal end of the optic fiber) is positioned at the first focal point 34 of the second ellipsoidal reflector 30 to receive the focused rays of electromagnetic radiation reflected by the second ellipsoidal reflector 30.

When the optical collection and condensing systems of the present invention are applied to applications for illuminations or projection of an image, there is a need to homogenize the output intensity profile at the target such that the output is more uniform. For example, for illumination during a medical procedure such as endoscopy, it is desirable to have uniform illumination so that the doctor can observe areas in the center and the periphery of the illumination with equal clarity. In the case of illuminations using optical fibers, the uniform intensity allows higher power to be coupled to a particular fiber optic configuration without being damaged by hot spots. In the case of projections, the uniform intensity will be needed to produce a uniform intensity profile at the screen. In particular, it is desirable for visual aesthetics that the center and the periphery of the displayed image have equal levels of illumination.

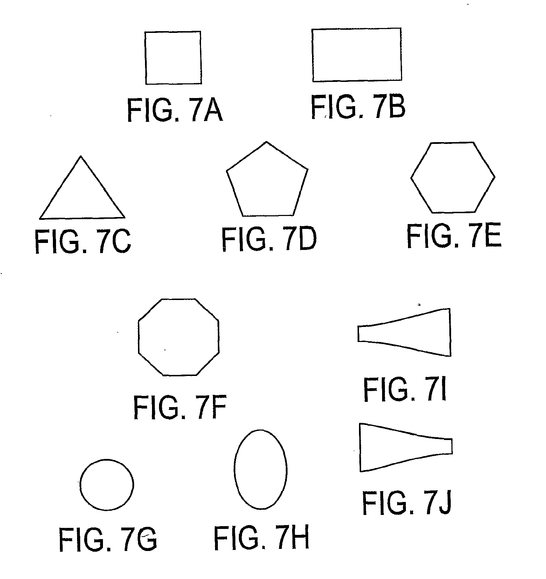

Accordingly, the target may be a homogenizer, as illustrated in FIG. 5, that adjusts the output intensity profile. The waveguide may be polygonal (square, rectangle, triangle, etc.) in cross-section as shown in as shown in FIGS. 7A-7F or rounded (circular, elliptical, etc.) in cross-section as shown in as shown in FIGS. 7G-7H.

Depending on the output requirement in terms of numerical aperture and size, the homogenizer can be tapered from smaller to larger sizes or vice versa. Thus, the target 50 can be an increasing taper waveguide as shown in FIG. 7I, or a decreasing taper waveguide as shown in FIG. 7J. In this way, the homogenizer allows changes in the shape of the output of the illumination. For example in projection displays in which an image source 60 is placed in the output stream of the target 50 through a condenser lens 80 and a projection lens 90 to create a projected image 70, the ideal output of the homogenizer will be rectangular with a ratio of width-to-height of 4-to-3 or 16-to-9, or other ratios, depending on the format of the display. Nevertheless, the angle of the illuminating radiation in both directions should be similar and such that a circular projection lens 90 can be used with the optical system efficiently.

While the target and the source are intimately associated with the collecting and condensing system of the present invention, according to its broader aspects, the invention relates to the use of two reflectors of substantially the same size and shape arranged so as to share a single focal point (i.e., the second focal point 26 of the first reflector 20 and the second focal point 36 of the second reflector 30 are located substantially identical positions).

Continuing with the description of the collecting and condensing system, in the arrangements shown in FIGS. 5-6, the first ellipsoidal reflector 20 and the second ellipsoidal reflector 30 are positioned in an opposed, facing relation with respect to each other so as to be concave toward each other. Optical symmetry is achieved in the arrangements of FIGS. 5-6 by arranging the first ellipsoidal reflector 20 and the second ellipsoidal reflector 30 so that their respective optical axes 22 and 32 are collinear and so that the reflective surface of the first ellipsoidal reflector 30 is an opposed, facing relation with the corresponding reflecting surface of the second ellipsoidal reflector 30 achieving a unit magnification.

In FIGS. 5-6, three rays **a, b,** and **c** are drawn to illustrate the function of the reflectors in view of different possible paths for the electromagnetic radiation produced by the source 10. In FIGS. 5-6, the rays **a, b,** and **c** are in substantially the same positions as in FIG. 4 in order to illustrate the effectiveness of the present optical system in reducing aberration. Each of the rays **a, b,** and **c** emitted from the light source 10 impinges the first ellipsoidal reflector 20 at a different point, each point having a different distance from source 10. But each of the rays **a, b,** and **c** is also focused onto the target 50 from a corresponding position of the second ellipsoidal reflector 30, thus produces a 1:1 magnification for the three rays.

As before, ray **a** has the shortest distance from the source 10 and the first ellipsoidal reflector 20 and consequentially produces a larger divergence in comparison to rays **b** and **c.** With the optical system of the present invention, radiation from the light source is focused from the first focal point 24 of the first reflector 20 to the second point 26. As a result, the distances traveled by the radiation from the source 10, even those emitted at high angles such as ray a, is relatively larger than the corresponding distance in the system of FIG. 4 that uses paraboloid reflectors. The larger distance reduces the amount of aberration because the distances of rays **a, b,** and **c** are now relatively more uniform.

To reduce aberration even further, FIG. 6 shows another embodiment of the present invention in which the first and second ellipsoidal reflectors 20' and 30' have greater eccentricity (i.e., the first and second ellipsoidal reflectors are more circular). As a result of the greater curvature of the first and second ellipsoidal reflectors 20' and 30' in this embodiment, the distance between the first focus 24' of the first ellipsoidal reflector 20' and the first focus 34' of the second ellipsoidal reflector 30' is reduced. At the same time, the greater curvature of the ellipsoidal reflectors 20' and 30' increases the distance between the first ellipsoidal reflector 20' and its first focus 24' along ray **a.** Likewise, the corresponding distance between the second ellipsoidal reflector 30' and its first focus 34' along ray **a** is increased. As a result, the distances traveled between the radiation source 10' and the first reflector 20' (as well as the total distance between the source 10' and the target 50') for the rays **a, b,** and **c** in FIG. 6 are relatively more uniform in comparison to the embodiment of FIG. 5. This feature allows the system to produce less aberration between the light source and the target, even with electricalmagnetic energy traveling near the optical axis 22', such as energy traveling paths similar to ray **a.**

By comparing the path of the same ray **c** in FIGS. 5 and 6, it can be seen that the embodiment of FIG. 6 uses reflectors 20' and 30' covering a greater portion of an ellipsoid in order to collect the same angle of output radiation from the source 10. However, it can be seen that reflectors 20' and 30' in FIG. 6 have approximately the same diameter as reflectors 20' and 30' in FIG. 5.

As shown in FIGS. 5 and 6, the collecting and condensing system of the present invention may incorporate the use of a retro-reflector 40, which, in the illustrated embodiment, is a spherical retro-reflector. The retro-reflector 40 is positioned to capture electromagnetic radiation emitted by the source 10 that would not otherwise impinge on the first ellipsoidal reflector 20. More particularly, the spherical retro-reflector 40 is constructed and arranged so that radiation emitted by the source 10 in a direction away from the first ellipsoidal reflector 20 is reflected by the retro-reflector 40 back through the first focal point 24 of the first ellipsoidal reflector 20 and thereafter toward the first ellipsoidal reflector 20. This additional radiation reflected by the first ellipsoidal reflector 20 is added to the radiation that impinges the first ellipsoidal reflector 20 directly from the source 10 to thereby increase the intensity of the radiation reflected toward the second ellipsoidal reflector 30. Consequently, the intensity of the radiation at the first focal point 34 of the second ellipsoidal reflector 30 is also increased.

If a filament lamp is employed as the source 10, the retro-reflector cannot be oriented so that it focuses radiation back through the first focal point 24 of the first ellipsoidal reflector 20, because the retro-reflected radiation would be blocked by the opaque filaments located at the first focal point 24. In this case, the position of the retro-reflector 40 should be adjusted so that the retro-reflected radiation passes near but not precisely through the first focal point 24.

It should be appreciated that several different retro-reflectors 40 are known and may be employed in the present invention. For example, as an alternative to a spherical retro-reflector 40, the retro-reflecting function can be performed by a two-dimensional corner cube array (not shown) with unit elements sized on the order of the arc size of the source 10 or smaller. Employing a two-dimensional corner cube array eliminates the need for precisely positioning a retro-reflector and will produce a tighter focus at the arc of the source 10.

It should be further appreciated that, although the above embodiments describe configurations with first and second reflectors having an ellipsoidal shape, it is known and anticipated by the present invention that first and second reflector 20 and 30 may be approximated using shapes that are slightly different from an ideal geometric ellipsoid shape. For example, the first and second reflector 20 and 30 may have altered ellipsoidal shapes to compensate of various parameters, such as bulb envelops, filters, etc. In this case, the deviation in the shape of the generally ellipsoidal reflectors 20 and 30 can be small and the final output may be slightly different from the optimum. Deviations in the shape of the reflectors can also be introduced to reduce cost of the reflectors 20 and 30, or increase performance for particular lamp types and arc shapes. For example, it is known and anticipated by the present invention that ellipsoidal reflectors 20 and 30 can be approximated by toroidal reflectors (having two perpendicular and unequal radii of curvature) or spherical reflectors, which can be manufactured at a lower relative cost. If non-ellipsoidal reflectors are used, the output coupling may not be optimum, but the reduced expense for the first and second reflectors 20 and 30 may be sufficient to justify the loss through the inefficient coupling.

Several examples of the present invention are now provided. These examples are meant to illustrate some possible implementations of the present invention but are not intended to limit the scope of the present invention.

### Examples

A first pair of exemplary optical systems in accordance with the present invention uses a low wattage lamp, in the order of 100 Watts, as the lights source. In a reflection system in accordance with the embodiment of FIG. 5, each of the first and second reflectors has a diameter of 2.5 inches, and the separation between the source and target (i.e., the distance between the foci) is about 5 inches. In contrast, a low wattage reflection system of greater eccentricity in accordance with the embodiment illustrated in FIG. 6 uses first and second reflectors of similar size, each having diameter of approximately 2.5 inches, but has a distance between the source and target of approximately 2 inches.

In higher wattage applications, the optical system is relatively larger to provide desirable collection of the higher electromagnetic energy levels and to accommodate the potentially larger lamps. For example, when using a high wattage lamp, on the order of 5,000 Watts with the configuration of FIG. 5, each of the primary reflectors has a diameter of 20 inches, and the separation between the source and the target is about 40 inches. As before, the embodiment of FIG. 6 uses primary reflectors of similar size but results in a reduced distance between the source and target. For instance, an exemplary high wattage optical system in accordance with embodiment of the FIG. 6, also uses first and second reflectors with a diameter of approximately 20 inches but has a distance between of the source and target of 16 inches.

### Conclusion

The invention, having been described, it will be apparent to those skilled in the art that the same may be varied in many ways without departing from the spirit and scope of the invention. Any and all such modifications are intended to be included within the scope of the following claims.

## Claims

1. - An optical device comprising :
- a single, non-cascaded source (10) of electromagnetic radiation,
- a target (50) to be illuminated with at least a portion of the electromagnetic radiation emitted by said source (10),
- a first reflector (20) being approximately ellipsoidal or toroidal in shape, this first reflector (20) having a first axis (22) on which a first and a second focal points (24, 26) are located, said source (10) being located proximate to said first focal point (24) of said first reflector (20) to produce rays of radiation that reflect from said first reflector (20) and substantially converge at said second focal point (26),
- a second reflector (30) being approximately ellipsoidal or toroidal in shape, this second reflector (30), having a second axis (32) on which a first and a second focal points (34, 36) are located, said target (50) being located proximate to said first focal point (34) of said second reflector (30) to receive rays of radiation (a, b, c) that pass through said second focal point (36) of said second reflector (30) and are reflected by said second reflector (30) to substantially converge at said first focal point (34) of said second reflector (30),
- said second reflector being positioned and oriented with respect to said first reflector (20) so that said second focal point (26) of said first reflector (20) and said second focal point (36) of said second reflector (30) are positioned substantially proximate and said first axis (22) of said first reflector (20) and said second axis (32) of said second reflector (30) are substantially collinear,
**characterized in that** :
- the first reflector (20) and the second reflector (30) have substantially the same size and shape so that each ray of radiation reflected by a surface portion of said first reflector (20) is reflected by a corresponding surface portion of said second reflector (30) toward said target (50), such that aberration introduced by the first reflector (20) is reversed by the second reflector (30), the magnification provided by the first and second reflectors (20, 30) to each ray of radiation can vary depending on the surface portion thereby introducing aberration,
- the first and second reflectors (20, 30) achieving substantially unit magnification between the source (10) and the target (50).

2. - Optical device according to claim 1, **characterized in that** :
- the eccentricity of the reflectors (20, 30) are selected in order to minimize the aberration between the source (10) and the target (50).

3. - Optical device according to claim 1 or 2, **characterized in that** :
- said first reflector (20) has a coating (28) that reflects only a prespecified portion of the electromagnetic radiation spectrum.

4. - Optical device according to claim 3, **characterized in that** :
- said coating (28) only reflects either visible light radiation, a prespecified broadband of radiation, or a specific color of radiation.

5. - Optical device according to one of the claims 1 to 4, **characterized in that** :
- said first and second reflector further comprises a non-ellipsoidal section.

6. - Optical device according to one of the claims 1 to 5, **characterized in that** :
- a portion of the electromagnetic radiation emitted by said source (10) impinges directly on said first reflector (20) and a portion of the electromagnetic radiation does not impinge directly on said first reflector,
- the device further comprising an additional reflector (40) constructed and arranged to reflect at least part of the portion of the electromagnetic radiation that does not impinge directly on said first reflector (20) toward said first reflector (20) through the first focal point (24) of said first reflector (20) to increase the flux intensity of the converging rays.

7. - Optical device according to claim 6, **characterized in that** :
- said additional reflector (40) comprises a spherical retro-reflector disposed on a side of said source (10) opposite said first reflector (20) to reflect electromagnetic radiation emitted from said source (10) in a direction away from said first reflector (20) toward said first reflector (20) through the first focal point (24) of said first reflector (20).

8. - Optical device according to one of the claims 1 to 7, **characterized in that** :
- said source (10) comprises a light-emitting arc lamp.

9. - Optical device according to claim 8, **characterized in that** :
- said arc lamp comprises a lamp selected from the group comprising a xenon lamp, a metal halide lamp, an HID lamp, or a mercury lamp.

10. - Optical device according to one of the claims 1 to 9, **characterized in that** :
- said source (10) comprises a filament lamp.

11. - Optical device according to one of the claims 1 to 10, **characterized in that** :
- said target (50) comprises a waveguide selected from the group comprising a single core optic fiber, a fiber bundle, a fused fiber bundle, a polygonal rod, a hallow reflective light pipe, or a homogenizer.

12. - Optical device according to claim 11, **characterized in that** :
- said waveguide is selected from the group consisting of circular cross-section waveguides, polygonal cross-section waveguides, tapered waveguides and combination thereof.

13. - Optical device according to claim 12, **characterized in that** :
- said waveguide is rectangular to produce a radiation output having a width-to-height ratio of either 4-to-3 or 16-to-9.

14. - Optical device according to one of the claims 1 to 13, **characterized in that** :
- the optical device further comprises an image source (60) illuminated by the radiation collected and condensed at said target (50), said image source (60) containing a stored image, said stored image being projected by the radiation.

15. - Optical device according to one of the claims 1 to 14, **characterized in that** :
- the optical device further comprises a fiber optic, the fiber optic being illuminated by the radiation collected and condensed at said target (50), the fiber optic releasing the collected and condensed radiation to provide for illumination at a desired location.

16. - Optical device according to one of the claims 1 to 15, **characterized in that** :
- the first and second reflector (20, 30) each have diameter that is greater than a distance between the source (10) and the target (50),

17. - A method for collecting electromagnetic radiation emitted by a single, non cascaded source (10) of electromagnetic radiation, and focusing the collected radiation onto a target (50), said method comprising the step of:
- positioning said source (10) of electromagnetic radiation at a first focal point (24) of a first ellipsoidal reflector (20) so that said first reflector (20) produces rays of radiation reflected from said first reflector (20) that converge at a second focal point (26) of said first reflector (20),
- positioning a second ellipsoidal reflector (30) so that a first focal point (34) of the second ellipsoidal reflector (30) is substantially proximate with the second focal point (26) of the first ellipsoidal reflector (20), and
- positioning the target (50) proximate to the second focal point (36) of said second reflector (30),
- the converging rays (a, b, c) of radiation reflected from said first reflector (20) pass through the first focal point (24) of the first reflector (20) and are redirected by said second reflector (30) toward a second focal point (36) of said second reflector (30), and
- orientating the first reflector (20) and the second reflector (30) so that a first axis (22) of the first reflector (20) and a second axis (32) of the second reflector (30) substantially coincide, the first and the second focal points of the first reflector (20) being located on the first axis (22), the first and the second focal points of the second reflector (30) being located on the second axis (32),
- selecting the first reflector (20) and the second reflector (30) having substantially the same size and shape so that each ray of radiation reflected by a surface portion of said first reflector (20) is reflected by a corresponding surface portion of said second reflector (30) toward said target (50), such that aberration introduced by the first reflector (20) is reversed by the second reflector (30), the magnification provided by the first and second reflectors (20, 30) to each ray of radiation can vary depending on the surface portion thereby introducing aberration,
- the first and second reflectors (20, 30) achieving substantially unit magnification between the source (10) and the target (50).

18. - Method according to claim 17 comprising the step of :
- selecting the eccentricity of the reflectors (20, 30) in order to minimize the aberration between the source (10) and the target (50).
